# EUROPEAN PATENT SPECIFICATION

(11) **EP 2 543 882 B1**
(45) Date of publication and mention of the grant of the patent: **26.08.2015**
(21) Application number: 11172707.9
(22) Date of filing: 05.07.2011
(51) Int. Cl.: F04B 19/24, F03G 7/06, G01K 5/32, G05D 23/02, G05D 23/13

(54) **Temperature responsive material driven actuator**
Aktuator welcher von einem auf Temperatur reagierendes Material angetrieben wird
Actionneur commandé par un matériau réagissant à la température

(43) Date of publication of application: 09.01.2013
(73) Proprietor: Rettig ICC B.V., 6199 AA Maastricht-Airport (NL)
(72) Inventor: Arvidsson, Thomas, 341 35 Ljungby (SE)
(74) Representative: Ahlberg, Lena Camilla

(56) References cited:
- EP-A1- 0 153 555
- EP-A1- 1 391 798
- WO-A1-97/49914
- FR-A1- 2 925 183
- US-A- 2 128 274
- US-A- 3 180 150
- US-A- 3 404 530

## Description

### Field of the Invention

The present invention relates to a temperature responsive material driven actuator comprising a housing having a cavity. A temperature sensing body is arranged in the cavity. The temperature sensing body comprises a thermally conductive device and a temperature responsive material.

### Background Art

Actuators driven by temperature responsive materials have been widely used for many decades for self-regulation of for instance radiator valves. The nature of the temperature responsive material, i.e. the fact that the temperature responsive material expands or contracts in response to a change in temperature, is utilized for closing or opening the valve. An advantage of actuators driven by temperature responsive materials is that the process may be completely self-contained without any complex electronics being necessary. A self-regulating valve in a radiator controls the temperature of a room by regulating the flow of hot water to the radiator. Self-regulating valves using temperature responsive materials also exist for steam radiators. The temperature responsive material may be solid, liquid or gas. For instance wax may be used as temperature responsive material.

A common type of thermally responsive material driven actuator consists of a brass housing which is open in one end. The housing is filled with wax and a membrane is located at the open end of the housing. A movable actuating member is arranged at the opposite side of the membrane, with respect to the wax filled housing. The temperature of the wax changes upon a change in temperature of the housing. As the temperature of the wax increases, the wax expands and pushes on the membrane. The membrane pushes on the actuating member and displaces the actuating member linearly. In addition, when the temperature of the wax decreases, the volume of the wax is decreased, and the membrane and the actuating member are returned to their original positions by a spring arranged at the actuating member.

In order to get a faster temperature change of the wax in response to a temperature change of the housing, it is known to provide metal powder into the wax. GB 1 503 164 shows a thermally responsive material driven actuator in which a mix of wax and copper powder is used as temperature responsive material. In order to get a well defined thermal expansion it is important that the amount and distribution of copper powder is well controlled.

Preparation of wax and copper powder mixture is made by mixing copper powder and melted wax into a dough. The preparation of the dough is made batch wise. To minimize the variation of properties between different batches of wax and copper powder dough, preparation of the dough is made according to well defined recipes. A large batch of dough may be divided into several dough pieces and packed as semimanufactured dough. The semimanufactured dough is then portioned out into small moulds, usually cylindrical, each being for instance about half a cubic centimetre in size.

EP 0 153 555 discloses a temperature regulator for a mixing valve for cold and hot water. A temperature responsive material is arranged in a cavity of a housing. A thermally conductive device, which is folded into a star-shape, is surrounded by the temperature responsive material in the housing. The temperature responsive material expands upon a rise in temperature, and acts on a rod which is displaceable in its longitudinal direction.

US 3 180 150 discloses a temperature regulator for a hot water valve. The temperature regulator comprises a housing in which two different temperature responsive materials with different thermal expansion characteristics are arranged. The first temperature responsive material is located within a sleeve. The second temperature responsive material is located within a liner and is provided between the first expandable medium and the underside of a diaphragm which is movable in response to expansion or contraction of the temperature responsive materials. The liner and sleeve may be selected to have different coefficients of transmission of heat, thereby modulating the rate of heating or cooling of the temperature responsive materials.

US 3 404 530 discloses a heat motor having a thermally responsive material arranged in a tubular housing. One end of the housing is provided with a terminal having a shank portion and a circular head. A helical wire is arranged in the housing and is surrounded by thermally responsive material. To facilitate assembling of the heat motor, the helical wire has a first end which has a comparatively large loop termination such that the terminal may be passed through the loop termination. The helical wire further has a second end which has a comparatively small diameter hook termination in order to be sandwiched between the head of the terminal and an insulator in one end portion of the housing.

US 2 128 274 discloses an actuator comprising a housing holding temperature responsive elements that are in contact with the bottom of the housing for heat exchange with the housing bottom. A metal sheet may be wrapped with the temperature responsive elements to enhance heat the permeability of the material inside the housing.

### Summary of the Invention

It is an object of the present invention to provide an improved actuator with a temperature responsive material having well defined properties and for which predictions of the thermally expansion of the material may be given with low tolerance. These and other objects are met by the appended independent claims. Preferred embodiments of the present invention are presented in the dependent claims.

According to a first aspect, the inventive concept relates to a temperature responsive material driven actuator comprising a housing having a cavity, and a temperature sensing body being arranged in the cavity and comprising a thermally conductive device, and a temperature responsive material, wherein the temperature responsive material is expandable in the cavity in response to a temperature change of the temperature responsive material, wherein the thermally conductive device comprises a continuous element which extends in three dimensions such that the continuous element defines a space wherein the continuous element is a helical coil spring, and wherein said space defined by the helical coil spring is hourglass shaped.

An advantage of a temperature responsive material driven actuator according to the present invention is that its thermal properties may be better controlled than with prior art techniques. The shape of the continuous element may be well defined and may be adjusted to the particular thermal properties necessary for the application of the actuator. A high and equal quality of several batches of temperature responsive material may be maintain since the thermally conductive device may be prepared separately from the temperature responsive material and be moulded with the temperature responsive material in a later process step. One temperature sensing body may comprise one or several continuous elements. In comparison with temperature responsive material driven actuator having metal powder mixed in a temperature responsive material the actuator according to the present invention has better long term properties. The metal powder tend to sink to the bottom of the actuator, or be redistributed in the actuator, as times goes by while the continuous element stays in place in the actuator.

By temperature responsive material is meant a material or combination of materials which permit transformation of thermal energy into mechanical energy. The continuous element may occupy the sensing body from one end of the sensing body to the other end of the sensing body. The continuous element may alternatively occupy only a portion of the sensing body. By having the continuous element defining a space is meant that a space, i.e. a volume is formed by the continuous element, the volume being constrained by the continuous element. It is not necessary that the continuous element completely surrounds the volume it may be an open volume or space.

Preferably, the space is tapering in an hourglass shaped manner. Since the continuous element defines the space a tapering space in an hourglass shaped manner implies that the continuous element occupies the sensing body at locations which are at different distances from the housing.

Heat is conducted from the housing to the sensing body why a tapering space in an hourglass shaped manner may give improved heat distribution in the sensing body.

Preferably, the continuous element is constricted by the housing by a resilient action between the continuous element and the housing interior wall. A resilient action between the continuous element and the housing may be favourable during assembling of the actuator since the continuous element is held in place by the interior walls of the housing.

Alternatively, the continuous element may comprise an upwardly projecting gripping portion. Insertion of the continuous element in the housing may be facilitated since a robot, or a human, may grab the upwardly projecting gripping portion and control the continuous element in the upwardly projecting gripping portion. In case the continuous element is constricted by a resilient action between the continuous element and the housing interior wall, the continuous element may be preloaded, prior to insertion in the housing, by pinching the upwardly projecting gripping portion. If the continuous element is preloaded prior to insertion in the housing the width of the continuous element is decreased which facilitates insertion. In addition, the continuous element may comprise a bent strip, which then may comprise the upwardly projecting gripping portion.

It is also possible that the sensing body has a first end portion and a second end portion, the end portions being opposite end portions as seen in a main expansion direction in which the temperature responsive material expands inside the housing, wherein at least one first end of the continuous element is located at the first end portion of the sensing body, and an upwardly projecting gripping portion of the continuous element is located at the second end portion of the sensing body.

Preferably, the continuous element is in physical contact with an interior wall of the housing, along at least one contact portion. This embodiment may be advantageous since the heat transfer from the housing to the sensing body is increased if there are physical contact between the heat transferring continuous element and the housing. The contact portion may have a length which is extended along the circumference of the sensing body and being more than 50% and less than 100% of the length of the circumference of the sensing body. For instance an hourglass shaped spring fulfils this requirement.

Alternatively, the continuous element is filamentary. A filamentary element has a large surface area in comparison to the amount of material. One purpose of the continuous element is to provide heat to the sensing body which is more efficient if the surface area of the continuous element is large.

Alternatively, the sensing body has a first end portion and a second end portion, the end portions being opposite end portions as seen in a main expansion direction in which the temperature responsive material expands inside the housing, wherein a first point of the continuous element is located at the first end portion of the sensing body and a second end point of the continuous element is located at the second end portion of the sensing body. An end portion of the sensing body may not be interpreted as refereeing merely to the end surface of the sensing body but to a portion of the sensing body having one end at the end surface. Thus, the continuous element may be elongated along the entire sensing body, from one end surface of the sensing body to the other end surface of the sensing body, as seen in the main expansion direction. Alternatively, the continuous element may occupy a portion of the sensing body and therefore not extend entirely from one end surface to another end surface of the sensing body.

The hourglass shap of the helical coil spring may be interpreted as follows. A distance measured perpendicular to the main expansion direction, from the continuous element to an envelope surface of a circular cylindrical sensing body, has its largest value at one or both of the end points of the continuous element. The distance has its smallest value at a centre portion of the continuous element and is continually increased from the centre portion to the end points of the continuous element. Such a continuous element, or space defined by such continuous element, will have an hourglass appearance. Having an hourglass shape of the continuous element is foreseen since the heat conductive continuous element will be provided to the periphery of the sensing body as well as to the more centrally located portions of the sensing body, giving the sensing body an even and well defined distribution of heat conductive material. Moreover, the hourglass shape provides physical contact between the housing and the continuous element along two portions of the sensing body, i.e. at the end portions of the continuous element. Yet another advantage of an hourglass shape of the continuous element concerns handling of the continuous element before moulding it into the sensing body. Hourglass shaped bodies may be less likely to get stuck into each other than for instance conical bodies.

According to a second aspect, the inventive concept relates to use of a temperature responsive material driven actuator according to the above described temperature responsive material driven actuator in a radiator valve. Such radiator may for instance be a free standing or a wall mounted radiator. It may also be a cooling radiator used in a cooling system in connection with a convector.

According to a third aspect, the inventive concept relates to a method of producing a temperature responsive material driven actuator. The method comprises having a thermally conductive device comprising a continuous element being extended in three dimensions such that the continuous element defines a space; preparing a temperature sensing body by at least partially embedding the continuous element in a temperature responsive material; and arranging the temperature sensing body in a housing in which the temperature responsive material is allowed to expand in response to a temperature change of the temperature responsive material.
Alternatively, the temperature sensing body is arranged in the housing by arranging the continuous element in the housing; and moulding the temperature responsive material in the housing. When arranging the continuous element inside the housing it may be advantageous if at least some portion of the continuous element has a width which is slightly smaller that the cross section of the housing cavity, but still wide enough to be in contact with the interior wall of the housing. If the continuous element is resilient it may be possible that some portion of the continuous element has the same width as the cross section of the housing cavity, or even that some portion of the continuous element is slightly wider than the cross section of the housing cavity. Thus, the continuous element may abut on the housing interior wall and the continuous element may be held in place by the housing during the introduction of the temperature responsive material in the housing. The continuous may be pre-loaded prior to arranging the continuous element in the housing.

### Brief description of the Drawings

This and other aspects of the present invention will now be described in more detail, with reference to the appended drawings showing embodiments of the present invention, in which:
Fig. 1 is a schematic side view, in cross section, of a temperature responsive material driven actuator according to the invention;
Fig. 2 is a perspective view of the sensing body of the temperature responsive material driven actuator in Fig. 1;
Fig. 3 is a perspective view of a sensing body according to an alternative embodiment of a temperature responsive material driven actuator according to the invention; and
Fig. 4 is a perspective view of a sensing body according to an alternative embodiment of a temperature responsive material driven actuator according to the invention.

### Description of Preferred Embodiments

A temperature responsive material driven actuator may be used in for instance a radiator valve for controlling a temperature of a room. The overall principle of a temperature responsive material driven actuator will be described hereunder. The actuator has a housing made of a metal with high heat conductivity, for instance brass. A sensing body, made of a temperature responsive material, is situated interior of the housing. By temperature responsive material is meant a material which expands or contracts upon a change in temperature. An example of a temperature responsive material is wax but it is also possible to use a liquid or a gas. In the embodiments of the invention described hereinafter wax is used as temperature responsive material and the temperature responsive material driven actuator will hereinafter be referred to as wax actuator or simply actuator.

An actuator member, such as a pin, is arranged at an open end of the housing. The housing limits the expansion of the sensing body in the lateral directions. Therefore, the expansion of the sensing body is transferred to linear movement of the sensing body. As the sensing body is heated it expands and pushes on the actuator member, via a membrane member arranged at the open end of the housing.

In use of a wax actuator in a radiator valve it is utilized that a certain increase in temperature of the housing, and hence of the wax, causes the wax to expand to a certain extent. The temperature of the housing and of the wax may be controlled by an electronically controlled heating element such as a PTC (Positive Temperature Coefficient) thermistor. It is also possible, in particular if other temperature responsive materials than wax are used, to let the temperature of the housing be controlled directly by the room temperature.

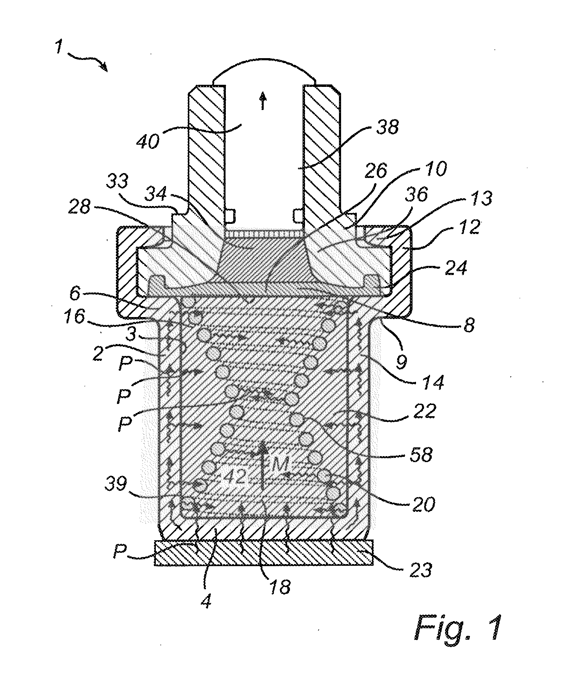

Fig. 1 illustrates an actuator 1 for use in, for instance, a thermally expandable radiator valve (not shown) for controlling the temperature of a room. For the purpose of illustration, the actuator 1 will here be described as oriented with a bottom portion 4 and a top portion 6, refereeing to the orientation of the actuator 1 in the drawings in Figs 1-4. In use, however, the actuator 1 may be oriented in any way and the function of the actuator 1 is not limited by a particular orientation of the actuator 1.

The actuator 1 shown in Fig. 1 comprises a cylindrical housing 2 made of brass. The housing 2 has an interior surface 3 and is closed at a first end 4, i.e. at the bottom portion 4, and sealed at a second end 6, i.e. at the top portion 6, by means of a membrane 8 clamped between a lid 10 and an annular shoulder 9 of the housing 2. The annular shoulder 9 of the housing 2 is continued by a circumferential edge 12 which surrounds the circumference of the lid 10. After the lid 10 has been arranged on the housing 2 the top portion of the circumferential edge 12 is bend towards the centre of the lid 10 forming an edge 13 which holds the lid 10 on the housing 2. The thickness of the housing wall 14 is about 1mm, being equally thick at the entire housing 2.

A cylindrical sensing body 16 is seated interior of the housing 2, in a housing cavity 18. The sensing body 16 fills the entire cavity 18, or nearly the entire cavity 18, of the housing 2. The sensing body 16 comprises wax 22 and a helical coil spring 20 made of phosphor bronze is embedded in the wax 22. The shape of the spring 20 will be described in more detail below. A suitable size of the sensing body 16 may for instance be about 1 cm in diameter and have a height of about 1 cm.

As described above, wax 22 is used as temperature responsive material in the embodiments of the invention describe here. Wax changes from solid to liquid state, and reverse, at a temperature between 65 and 75°C depending on for instance the composition of the wax 22 and on the surrounding pressure. The great volume expansion occurring as wax changes between solid and liquid states is utilized for the actuator stroke. It may however not be necessary to utilize the phase transition of the temperature responsive material. It is possible to use other temperature responsive materials than wax. For some temperature responsive materials or for some applications it might be enough to used the expansion of the temperature responsive material in one phase, such as liquid ethanol or any suitable gas.

In the embodiments shown in the drawings the wax 22 is in solid state. A PTC thermistor 23 is arranged at the bottom portion 4 of the housing 2, *i.e.* below housing 2, and is used for controlling the temperature of the housing 2 and thus of the sensing body 16. The PTC thermistor 23 may be connected to 220 V/50 Hz alternating current and is controlled by a thermostat (not shown). Thus, heat from the PTC thermistor 23 is conducted to the housing 2 via the bottom potion 4 of the housing 2. Heat from the housing walls 14 and bottom 4 is conducted to the sensing body 16. The heat transfer from the PTC thermistor 23 to the housing 2 and the sensing body 16 is illustrated by arrows P in Fig. 1.

The lid 10 serves to hold the membrane 8 in place at the open end 6 of the housing 2. The underside of the membrane periphery 24 seals against the annular shoulder 9 of the housing 2. Further, the membrane 8 has a centre portion 26 which underside is in contact with an upper surface 28 of the sensing body 16. In operation, the actuator 1 may be oriented as lying down, *i.e*. turned 90 degrees from the orientation illustrated in Fig. 1, and the membrane periphery 24 will thus function as a washer to seal the housing 2 and keep the wax 22, which may be liquid, inside the housing 2. The upper side of the lid 10 has elevations 33 for use for fastening the lid 10 at the housing 2, by means of fastening means (not shown).

The upper side of the membrane 8 comprises a centrally located, upwardly projecting, conical portion 34 held in an axial bore 40 of the lid 10. The axial bore 40 is shaped with a corresponding conical portion 36 which is thus occupied by the conical portion 34 of the membrane 8. The conical portion 34 of the membrane 8 may contribute to certain expansion characteristics for the actuator 1. However the membrane 8 may have another shape such as a cylindrical shape. Further, an actuation member 38, in the shape of a rod 38, is held in the axial bore 40 at the opposite side of the membrane 8 with respect to the sensing body 16. Expansion of the sensing body 16 forces the sensing body 16 to push on the membrane 8 which in turn pushes on the actuation member 38 to close the radiator valve. The actuation member 38 is pushed back by a spring member (not shown) such that the actuation member 38 may return to its original location as the volume of the sensing body 16 is decreased. Since the sensing body 16 fills the entire or nearly the entire housing 2 cavity 18, the sensing body 16 is allowed to expand mainly in one direction which direction is referred to as the main expansion direction M.

Returning now to the description of the spring 20. The geometry of the spring 20, as well as the geometry of any hollow object, implies that an interior volume 42 or space 42 is defined interior of the spring 20. For the particular spring 20 in illustrated in Fig. 1 the space 42 interior of the spring 20 has an hourglass shape which means that some portions of the space 42 are close to the housing 2 interior wall 3 and other portions of the space 42 are more distant from the housing 2 interior wall 3.

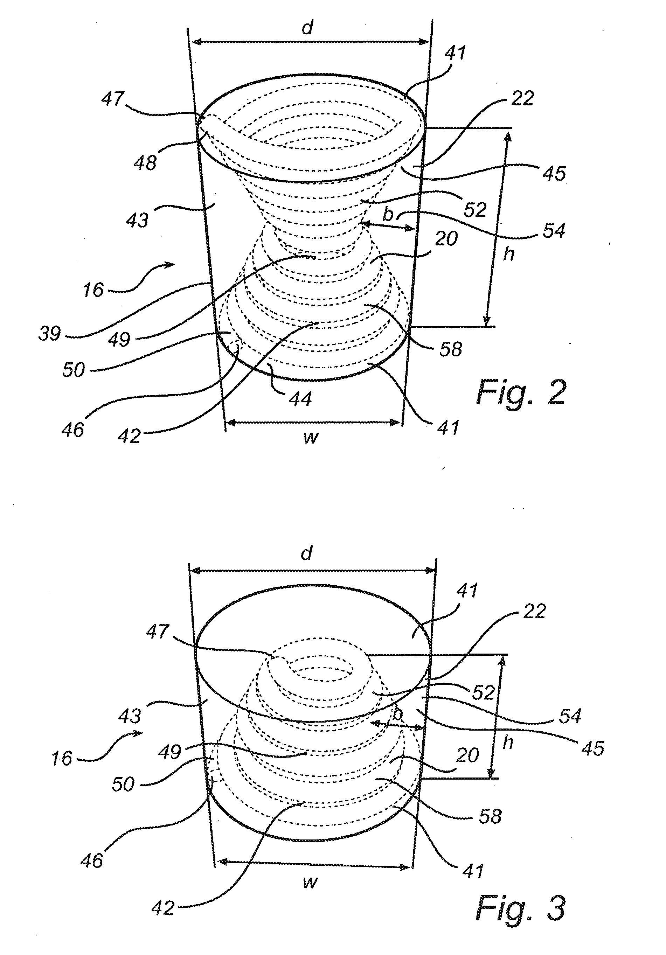

Fig. 2 shows the sensing body 16 of the actuator 1 in Fig. 1. The sensing body 16 has the shape of a circular cylinder thus having two circular base surfaces 41, one at each end portion 44, 45 of the sensing body 16, and an envelope surface 43, *i.e*. a lateral surface 43. The diameter of the sensing body 16 in Fig. 2 is denoted *d*. The diameter *d* of the sensing body 16 is adapted to fit the sensing body 16 tightly inside the housing 2 of the actuator 1 (Fig. 1). In other words, the diameter *d* of the sensing body 16 approximately corresponds to the inner diameter of the cylindrical housing 2 shown in Fig. 1.

As described above, the sensing body 16 comprises wax 22 which expands and contracts upon a change in temperature, in particular as the wax 22 changes from solid to liquid state, and reversely. The helical coil spring 20 is integrated in the wax 22 to increase the heat conductivity of the sensing body 16. The spring is made of phosphor bronze is. A first end 46 of the spring 20 is arranged in the first end portion 44 of the sensing body 16, and a second end 47 of the spring 20 is arranged in the second end portion 45 of the sensing body 16.

The spring 20 shown in Figs 1-2 consists of a filament which is wound eleven turns to form the spring 20. The length of the first turn, as seen from the lower end 44 of the sensing body 16 as illustrated in Figs 1-2, is substantially the same as the circumference of the sensing body 16. Consequently the interior wall 3 of the housing 2 is in contact with the spring 20 at least along the major part of the first turn of the spring 16. In other words, the width *w* of the first turn of the spring 20 is essentially the same as the diameter *d* of the sensing body 16. The following, four turns of the spring 20 have a smaller width w than a previous turn. After the sixth turn the width w of the turns are increasing gradually and the eleventh turn has the same width w as the first turn, forming an hourglass shaped spring 20.

As may be seen in Fig. 1 the interior wall 3 of the housing 2 is in physical contact with the spring 20 at the first and last turns of the spring 20. The portions where the spring 20 is in contact with the interior wall 3 of the housing 2 are referred to as contact portions 39. The physical contact between the spring 20 and the housing 2 provides for high heat transfer from the housing 2 to the sensing body 16 at the contact portions 39.

Moreover, in order to achieve an even heat distribution throughout the sensing body 16, some portions of the spring 20 are located at a periphery portion 48 of the sensing body 16 and other portions of the spring 20 are located at an inner portion 49 of the sensing body 16. For the hourglass shaped spring 20 in Figs 1-2 the end portions 46, 47 of the spring 20 are located at the periphery 48 of the sensing body 16 and middle portion of the spring 20 is located interior of the sensing body 16. Such hourglass shape of the spring 20 allows the spring 20 to reach the innermost portions 49 of the sensing body 16, which portions 49 are relatively distant from the envelope surface 43 of the sensing body 16. Thus, the heat may be transported from the housing 2 to the innermost portions 49 of the sensing body 16 in an efficient way.

In the embodiment shown in Fig. 2 the height *h* of the spring 20, from its first end 46 to its second end 47, is about the same as the height of the sensing body 16. In other words, the spring 20 is extended through the entire sensing body 16. As described above, the width w of the spring 20 varies along the length of the spring 20, being widest at the end portions 46, 47 of the spring 20.

Fig. 3 shows an alternative sensing body 16 for the actuator 1 disclosed in Fig. 1. In the embodiment of the sensing body 16 shown in Fig. 3 the spring 20 is conical, having its largest width *w* at the first end portion 46 of the spring 20 and the smallest width *w* at the second end portion 47 of the spring 20. The spring 20 shown in Fig. 3 consist of a phosphor bronze filament which is wound six turns.

For the embodiments shown in Figs 2 and 3 a distance *b* in the sensing body 16, from the continuous body 20 to the envelope surface 43 of the sensing body 16, perpendicular to the main expansion direction M, varies along the main expansion direction M. In the embodiment shown in Fig. 2 this distance *b* is larger at a centre portion 54 of the sensing body 16 than at the end portions 44, 45 of the sensing body 16. However, in the embodiment shown in Fig. 3 the distance *b* has its maximum at the second end portion 45 of the sensing body 16 and its minimum at the first end portion 44 of the sensing body 16.

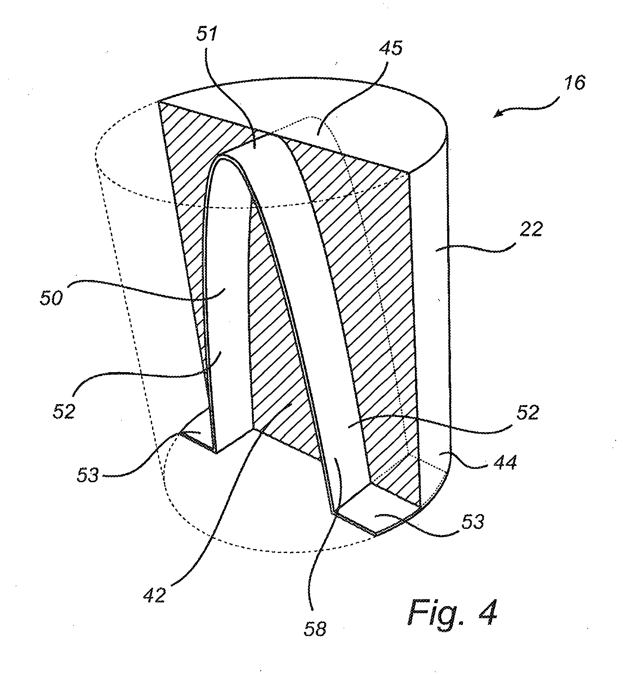

Fig. 4 shows a sensing body 16 for use in an actuator 1 in accordance with the actuator 1 described in connections with Fig. 1. Instead of the spring 20 disclosed in the previous embodiments shown in Figs 1-3 a clip 50 is used for increasing the heat transfer from the housing 2 (Fig. 1) to the sensing body 16. The other features of the sensing body 16, such as the wax 22 surrounding the clip 50 and the sensing body being cylindrical and having two end portions 44, 45, are the same for the sensing body 16 disclosed in Fig. 4 as for the sensing bodies 16 disclosed in Figs 1-3 and which are described in connection to Figs 1-3.

The clip 50 is formed by a metal strip and is formed with a soft bend 51, at the middle of the strip 50 giving the strip 50 a shape something in-between a u-shape and a v-shape, *i.e.* the clip 50 has two legs 52. In the illustration in Fig. 4 the clip 50 is oriented with the soft bend 51 at the top portion of the sensing body 16, such that the u- or v-shape is upside-down. The volume or space 42 between the legs 52 thus tapers upwards. At the leg 52 end portions 53, which thus are at the lower portion of the sensing body 16 illustrated in Fig. 4, the strip 50 is bent away from the space 42 forming a flat base for each of the legs 52.

When the sensing body 16 illustrated in Fig. 4 is placed in a housing 2, such as the housing 2 illustrated in Fig.1, the end portions 53 of the clip 50 will be in physical contact with the interior wall 3 of the housing 2. Possibly also the underside of the end portions 53 will be in physical contact of the bottom 4 of the housing 2. The physical contact between the bases 53 of the clip 50 and the housing 2 provides for high heat transfer from the housing 2 to the clip 50. Further, the shape and location of the legs 52 of the clip 50 provides for sufficient heat transfer to the interior portions of the sensing body 16 when used in an actuator 1.

Assembling of the actuator 1 may be carried out by pouring liquid wax directly into the cavity 18 of the housing 2. Prior to pouring the wax 22 into the housing 2 a thermally conductive device 58, *i.e*. the spring 20 or the clip 50 or any other suitable thermally conductive device 58, is placed in the housing 2 cavity 18. Since the size of the thermally conductive device 58 corresponds to the size of the cavity the thermally conductive device 58 is held firmly in place during assembling. In other words, the width *w* of the thermally conductive device 58 assures that at least some portions 39 of the thermally conductive device 58 are in contact with the interior wall 3 of the housing when the thermally conductive device 58 has been placed in the housing 2. Moreover, the resilient characteristics of the spring 20 and the clip 50, respectively, facilitates insertion of the spring 20 or clip 50 in the housing 2 since the spring 20 or clip 50 may be compressed during insertion in the housing 2.

Compression of the clip 50 may be carried out by pinching the clip 50 at the bend 51 of the clip 50. The bend 51 may also be referred to as an upwardly projecting portion 51 of the clip 50. The clip 50 can then be inserted in the housing cavity 18 and released to allow the end surfaces of the bases 53 of the clip 50 to abut onto the interior walls 3 of the housing 2. If a spring 20 is used as thermally conductive device 58 insertion of the spring 20 may be facilitated by the resilient characteristics of the spring 20.

When the thermally conductive device 58 has been placed inside the housing, liquid wax is poured into the housing 2 and the thermally conductive device 58 becomes surrounded by the wax 22. The portions of the thermally conductive device 58 which are in contact with the interior wall 18 of the housing 2 may not be completely surrounded by wax 22, but the contact between the thermally conductive device 58 and the housing interior wall 22 may be maintained. The membrane 8, the lid 10 and the actuation member 24 are arranged at the open end 6 of the housing 2. In addition, it is possible to prepare the sensing body 16 in a separate mould and subsequently insert the sensing body 16 into the housing 2.

It will be appreciated that numerous variants of the embodiments described above are possible within the scope of the appended claims. For example it is possible to have more than one thermally conductive device in one sensing body.

It is not necessary that the thermally conductive device is made by phosphor bronze but the thermally conductive device may be made of any suitable heat conductive material, for instance copper. Moreover, the temperature responsive material may be any suitable temperature responsive material, for instance some suitable liquid or gas. In addition, the housing may be made of any suitable material. The size of the actuator of the sensing body may be any suitable size.

## Claims

1. A temperature responsive material driven actuator (1) comprising a housing (2) having a cavity (18), and a temperature sensing body (16) being arranged in the cavity (18) and comprising a thermally conductive device (58), and a temperature responsive material (22), wherein the temperature responsive material (22) is expandable in the cavity (18) in response to a temperature change of the temperature responsive material (22), wherein the thermally conductive device (58) comprises a continuous element (20, 50) which extends in three dimensions such that the continuous element (20, 50) defines a space (42), **characterized in that** the continuous element (20, 50) is a helical coil spring and **in that** said space (42) defined by the helical coil spring is hourglass-shaped.

2. A temperature responsive material driven actuator (1) according to anyone of the preceding claims, wherein the continuous element (20, 50) is constricted by the housing (2) by a resilient action between the continuous element (20, 50) and the housing interior wall (3).

3. A temperature responsive material driven actuator (1) according to anyone of the preceding claims, wherein the continuous element (50) comprises a bent strip (50).

4. A temperature responsive material driven actuator (1) according to anyone of the preceding claims, wherein the continuous element (50) comprises an upwardly projecting gripping portion (51).

5. A temperature responsive material driven actuator (1) according to anyone of the preceding claims, wherein the sensing body (16) has a first end portion (44) and a second end portion (45), the end portions (44, 45) being opposite end portions as seen in a main expansion direction (M) in which the temperature responsive material (22) expands inside the housing (2), wherein at least one first end portion (53) of the continuous element (50) is located at said first end portion (44) of the sensing body (16), and an upwardly projecting gripping portion (51) of the continuous element (50) is located at said second end portion (45) of the sensing body (16).

6. A temperature responsive material driven actuator (1) according to anyone of the preceding claims, wherein the continuous element (20, 50) is in physical contact with an interior wall (3) of the housing (2), along at least one contact portion (39).

7. A temperature responsive material driven actuator (1) according to claim 6, wherein said contact portion (39) has a length which is extended along the circumference of the sensing body (16), said length of the contact portion (39) being more than 50% and less than 100% of the length of the circumference of the sensing body (16).

8. A temperature responsive material driven actuator (1) according to anyone of the preceding claims, wherein the continuous element (20) is filamentary.

9. A temperature responsive material driven actuator (1) according to anyone of the preceding claims, wherein the sensing body (16) has a first end portion (44) and a second end portion (45), the end portions (44, 45) being opposite end portions as seen in a main expansion direction (M) in which the temperature responsive material (22) expands inside the housing (2), wherein a first point (50) of the continuous element (20) is located at said first end portion (44) of the sensing body (16) and a second end point (47) of the continuous element (20) is located at said second end portion (45) of the sensing body (16).

10. Use of a temperature responsive material driven actuator (1) according to anyone of the preceding claims in a radiator valve.

11. Method of producing a temperature responsive material driven actuator (1), the method comprising:
- having a thermally conductive device comprising a continuous element (20, 50) in the form of a helical coil spring being extended in three dimensions such that the continuous element (20, 50) defines a space (42) which is hourglass-shaped;
- preparing a temperature sensing body (16) by at least partially embedding the continuous element (20, 50) in a temperature responsive material (22); and
- arranging the temperature sensing body (16) in a housing (2) in which the temperature responsive material (22) is allowed to expand in response to a temperature change of the temperature responsive material (22).

12. Method according to claim 11, wherein the continuous element (20, 50) is pre-loaded prior to arranging the continuous element (20, 50) in the housing (2).

## Patentansprüche

1. Durch auf Temperatur ansprechendes Material angetriebener Aktor (1), der ein Gehäuse (2), das einen Hohlraum (18) und einen Temperaturabfühlkorpus (16), der in dem Hohlraum (18) angeordnet ist und eine wärmeleitfähige Einrichtung (58) umfasst, hat, und ein auf Temperatur ansprechendes Material (22) umfasst, wobei das auf Temperatur ansprechende Material (22) in dem Hohlraum (18) als Reaktion auf eine Temperaturveränderung des auf Temperatur ansprechenden Materials (22) ausdehnbar ist, wobei die wärmeleitfähige Einrichtung (58) ein durchgehendes Element (20, 50) umfasst, das sich derart in drei Dimensionen erstreckt, dass das durchgehende Element (20, 50) einen Raum (42) definiert, **dadurch gekennzeichnet, dass** das durchgehende Element (20, 50) eine spiralförmige Schraubenfeder ist und dass der durch die spiralförmige Schraubenfeder definierte Raum (42) sanduhrförmig ist.

2. Durch auf Temperatur ansprechendes Material angetriebener Aktor (1) nach einem der vorhergehenden Ansprüche, wobei das durchgehende Element (20, 50) durch das Gehäuse (2) durch eine elastische Wirkung zwischen dem durchgehenden Element (20, 50) und der Gehäuse-Innenwand (3) verengt wird.

3. Durch auf Temperatur ansprechendes Material angetriebener Aktor (1) nach einem der vorhergehenden Ansprüche, wobei das durchgehende Element (50) einen gebogenen Streifen (50) umfasst.

4. Durch auf Temperatur ansprechendes Material angetriebener Aktor (1) nach einem der vorhergehenden Ansprüche, wobei das durchgehende Element (50) einen nach oben vorspringenden Greifabschnitt (51) umfasst.

5. Durch auf Temperatur ansprechendes Material angetriebener Aktor (1) nach einem der vorhergehenden Ansprüche, wobei der Abfühlkorpus (16) einen ersten Endabschnitt (44) und einen zweiten Endabschnitt (45) hat, wobei die Endabschnitte (44, 45) entgegengesetzte Endabschnitte sind, gesehen in einer Hauptausdehnungsrichtung (M), in der sich das auf Temperatur ansprechende Material (22) innerhalb des Gehäuses (2) ausdehnt, wobei wenigstens ein erster Endabschnitt (53) des durchgehenden Elements (50) an dem ersten Endabschnitt (44) des Abfühlkorpus (16) angeordnet ist und ein nach oben vorspringender Greifabschnitt (51) des durchgehenden Elements (50) an dem zweiten Endabschnitt (45) des Abfühlkorpus (16) angeordnet ist.

6. Durch auf Temperatur ansprechendes Material angetriebener Aktor (1) nach einem der vorhergehenden Ansprüche, wobei das durchgehende Element (20, 50), entlang wenigstens eines Berührungsabschnitts (39), in physischer Berührung mit einer Innenwand (3) des Gehäuses (2) steht.

7. Durch auf Temperatur ansprechendes Material angetriebener Aktor (1) nach Anspruch 6, wobei der Berührungsabschnitt (39) eine Länge hat, die sich entlang des Umfangs des Abfühlkorpus (16) erstreckt, wobei die Länge des Berührungsabschnitts (39) mehr als 50 % und weniger als 100 % der Länge des Umfangs des Abfühlkorpus (16) beträgt.

8. Durch auf Temperatur ansprechendes Material angetriebener Aktor (1) nach einem der vorhergehenden Ansprüche, wobei das durchgehende Element (20) faserförmig ist.

9. Durch auf Temperatur ansprechendes Material angetriebener Aktor (1) nach einem der vorhergehenden Ansprüche, wobei der Abfühlkorpus (16) einen ersten Endabschnitt (44) und einen zweiten Endabschnitt (45) hat, wobei die Endabschnitte (44, 45) entgegengesetzte Endabschnitte sind, gesehen in einer Hauptausdehnungsrichtung (M), in der sich das auf Temperatur ansprechende Material (22) innerhalb des Gehäuses (2) ausdehnt, wobei ein erster Punkt (50) des durchgehenden Elements (20) an dem ersten Endabschnitt (44) des Abfühlkorpus (16) angeordnet ist und ein zweiter Endpunkt (47) des durchgehenden Elements (20) an dem zweiten Endabschnitt (45) des Abfühlkorpus (16) angeordnet ist.

10. Verwendung eines durch auf Temperatur ansprechendes Material angetriebenen Aktors (1) nach einem der vorhergehenden Ansprüche in einem Heizkörperventil.

11. Verfahren zur Herstellung eines durch auf Temperatur ansprechendes Material angetriebenen Aktors (1), wobei das Verfahren Folgendes umfasst:
- das Nehmen einer wärmeleitfähigen Einrichtung, die ein durchgehendes Element (20, 50) in der Form einer spiralförmigen Schraubenfeder umfasst, das sich derart in drei Dimensionen erstreckt, dass das durchgehende Element (20, 50) einen Raum (42) definiert, der sanduhrförmig ist,
- das Vorbereiten eines Temperaturabfühlkorpus (16) durch das wenigstens teilweise Einbetten des durchgehenden Elements (20, 50) in einem auf Temperatur ansprechenden Material (22) und
- das Anordnen des Temperaturabfühlkorpus (16) in einem Gehäuse (2), in dem ermöglicht wird, dass sich das auf Temperatur ansprechende Material (22) als Reaktion auf eine Temperaturveränderung des auf Temperatur ansprechenden Materials (22) ausdehnt.

12. Verfahren nach Anspruch 11, wobei das durchgehende Element (20, 50) vor dem Anordnen des durchgehenden Elements (20, 50) in dem Gehäuse (2) vorgespannt wird.

## Revendications

1. Actionneur commandé par un matériau réagissant à la température (1) comprenant un boîtier (2) ayant une cavité (18) et un corps détectant la température (16) étant disposé dans la cavité (18) et comprenant un dispositif thermoconducteur (58) et un matériau réagissant à la température (22), dans lequel le matériau réagissant à la température (22) est expansible dans la cavité (18) en réaction à un changement de température du matériau réagissant à la température (22), dans lequel le dispositif thermoconducteur (58) comprend un élément continu (20, 50) qui s'étend dans trois dimensions de telle manière que l'élément continu (20, 50) définit un espace (42) **caractérisé en ce que** l'élément continu (20, 50) est un ressort hélicoïdal et **en ce que** ledit espace (42) défini par le ressort hélicoïdal est en forme de sablier.

2. Actionneur commandé par un matériau réagissant à la température (1) selon l'une quelconque des revendications précédentes, dans lequel l'élément continu (20, 50) est étranglé par le boîtier (2) par une action résiliente entre l'élément continu (20, 50) et la paroi intérieure de boîtier (3).

3. Actionneur commandé par un matériau réagissant à la température (1) selon l'une quelconque des revendications précédentes, dans lequel l'élément continu (50) comprend une bande pliée (50).

4. Actionneur commandé par un matériau réagissant à la température (1) selon l'une quelconque des revendications précédentes, dans lequel l'élément continu (50) comprend une section de serrage se projetant vers le haut (51).

5. Actionneur commandé par un matériau réagissant à la température (1) selon l'une quelconque des revendications précédentes, dans lequel le corps de détection (16) possède une première section d'extrémité (44) et une deuxième section d'extrémité (45), les sections d'extrémité (44, 45) étant des sections d'extrémité opposées vues dans une direction d'expansion principale (M) dans laquelle le matériau réagissant à la température (22) se dilate à l'intérieur du boîtier (2), dans lequel au moins une première section d'extrémité (53) de l'élément continu (50) est située à ladite première section d'extrémité (44) du corps de détection (16) et une section de serrage se projetant vers le haut (51) de l'élément continu (50) est située à ladite deuxième section d'extrémité (45) du corps de détection (16).

6. Actionneur commandé par un matériau réagissant à la température (1) selon l'une quelconque des revendications précédentes, dans lequel l'élément continu (20, 50) est en contact physique avec une paroi intérieure (3) du boîtier (2), le long d'au moins une section de contact (39).

7. Actionneur commandé par un matériau réagissant à la température (1) selon la revendication 6, dans lequel ladite section de contact (39) a une longueur qui est étendue le long de la circonférence du corps de détection (16), ladite longueur de la section de contact (39) étant supérieure à 50% et de moins de 100% de la longueur de la circonférence du corps de détection (16).

8. Actionneur commandé par un matériau réagissant à la température (1) selon l'une quelconque des revendications précédentes, dans lequel l'élément continu (20) est filamentaire.

9. Actionneur commandé par un matériau réagissant à la température (1) selon l'une quelconque des revendications précédentes, dans lequel le corps de détection (16) a une première section d'extrémité (44) et une deuxième section d'extrémité (45), les sections d'extrémité (44, 45) étant des sections d'extrémité opposées vues dans une direction d'expansion principale (M) dans laquelle le matériau réagissant à la température (22) se dilate à l'intérieur du boîtier (2), dans lequel un premier point (50) de l'élément continu (20) est situé à ladite première section d'extrémité (44) du corps de détection (16) et un deuxième point d'extrémité (47) de l'élément continu (20) est situé à ladite deuxième section d'extrémité (45) du corps de détection (16).

10. Utilisation d'un actionneur entraîné par un matériau réagissant à la température (1) selon l'une quelconque des revendications précédentes dans un robinet de radiateur.

11. Méthode de production d'un actionneur entraîné par un matériau réagissant à la température (1), ladite méthode comprenant:
- le fait d'avoir un dispositif thermoconducteur comprenant un élément continu (20,50) sous la forme d'un ressort hélicoïdal étant étendu dans trois dimensions de telle manière que l'élément continu (20, 50) définit un espace (42) qui est en forme de sablier,
- la préparation d'un corps détectant la température (16) en intégrant au moins partiellement l'élément continu (20,50) dans un matériau réagissant à la température (22), et
- la mise en place du corps de détection de température (16) dans un boîtier (2) dans lequel on laisse le matériau réagissant à la température (22) se dilater en réaction à un changement de température du matériau réagissant à la température (22).

12. Méthode selon la revendication 11 dans laquelle l'élément continu (20,50) est chargé préalablement avant de disposer l'élément continu (20,50) dans le boîtier (2).
